# EUROPÄISCHE PATENTSCHRIFT

(11) **EP 0 415 048 B1**
(45) Veröffentlichungstag und Bekanntmachung des Hinweises auf die Patenterteilung: **28.09.1994**
(21) Anmeldenummer: 90113533.5
(22) Anmeldetag: 14.07.1990
(51) Int. Cl.: B60K 41/14, B60K 41/06

(54) **Verfahren zum Regeln einer Motor-/Getriebe-Kombination**
Control method for an engine/transmission assembly
Procédé de régulation d'un ensemble moteur/transmission

(30) Priorität: 30.08.1989 DE 3928653
(43) Veröffentlichungstag der Anmeldung: 06.03.1991
(73) Patentinhaber: ROBERT BOSCH GMBH, 70442 Stuttgart (DE)
(72) Erfinder: Wesel, Wolf, Ing. grad., W-7141 Oberriexingen (DE)

(56) Entgegenhaltungen:
- EP-A- 0 061 735
- EP-A- 0 073 475
- US-A- 4 546 673
- PATENT ABSTRACTS OF JAPAN vol. 7, no. 230 (M-249)(1375) 12 Oktober 1983,& JP-A-58 122339 (MITSUBISHI) 21 Juli 1983,
- DE-A 29 27 707

## Beschreibung

Die Erfindung betrifft ein Verfahren zum Einstellen der Kraftstoffmenge, die einem Verbrennungsmotor abhängig von der Stellung eines Fahrpedals zugeführt wird, und zum, gleichzeitigen Regeln des Übersetzungsverhältnisses eines feinstufigen Getriebes und damit der Drehzahl des Motors so, daß sich minimaler Kraftstoffverbrauch ergibt. Unter einem feinstufigen Getriebe wird im folgenden auch ein stufenloses Getriebe verstanden, als Grenzfall eines feinstufigen Getriebes.

### Stand der Technik

Ein derartiges Verfahren ist von J.P. Helling und E. Stahl in einem Artikel mit dem Titel "elektronische Regelung für kraftstoffsparendes Motor-Getriebe-Management im Forschungs-PKW Uni-CAR" beschrieben, erschienen in VDI-Berichte Nr. 418, 1981, Seiten 93 bis 98.

Im genannten Artikel ist u.a. ein übliches Motorkennfeld dargestellt, wie es auch Grundlage für die vorliegende Erfindung ist. Im Kennfeld ist der Kraftstoffverbrauch für unterschiedliche Werte des Motordrehmoments und der Motordrehzahl dargestellt. Weiterhin sind Linien gleicher Motorleistung eingezogen. Für jede Motorleistung gibt es einen ganz besonderen Punkt im Kennfeld, also einen besonderen Drehmomentwert mit zugehörigem Drehzahlwert, in dem der Kraftstoffverbrauch minimal ist.

Das im genannten Artikel beschriebene Verfahren arbeitet so, daß durch die Stellung eines Fahrpedals das Motordrehmoment festgelegt wird. Die Motordrehzahl wird auf den zugehörigen Drehzahlwert für minimalen Kraftstoffverbrauch eingeregelt. Abhängig vom jeweiligen Betriebspunkt erfolgt die Regelung der Drehzahl unabhängig von der Steuerung des Drehmoments, oder es wird eine Folgeregelung verwendet, gemäß der primär die Drehzahl geregelt wird und in Abhängigkeit von der Istdrehzahl das Drehmoment eingestellt wird. Für besondere Instationärabläufe werden weitere Algorithmen für das Einstellen von Drehmoment und Drehzahl verwendet.

Das bekannte Verfahren ist somit relativ kompliziert. Es besteht aber grundsätzlich der Wunsch, Steuerungs/Regelungs-Verfahren so einfach wie möglich und dennoch so wirkungsvoll wie möglich auszugestalten.

Die DE-A 29 27 707 zeigt eine Motor- und Getriebe-Steuereinrichtung. Bei dieser Einrichtung ist vorgesehen, daß der Motor mit großer Drosselklappeneinstellung betrieben wird. Die Leistungsabgabe bzw. die Drehzahl der Brennkraftmaschine wird mittels des Übersetzungsverhältnisses des Getriebes so geändert, daß sich die gewünschte Motordrehzahl einstellt. Hierdurch soll gewährleistet werden, daß die Brennkraftmaschine mit Blick auf den Kraftstoffverbrauch in ihrem optimalen Betriebsbereich arbeitet. Als optimaler Betrieb wird hier angesehen, daß die Brennkraftmaschine mit geöffneter Drosselklappe arbeitet. Die Vorgabe der Einstellung des Getriebes erfolgt lediglich abhängig von der gewünschten Drehzahl. Mit einer solchen Einrichtung ist eine auf minimalen Kraftstoffverbrauch optimierte Vorgabe der eingespritzten Kraftstoffmenge und der Getriebestellung abhängig von der Fahrpedalstellung nicht möglich.

Aus der EP-A 0 073 475 ist eine Einrichtung bekannt, bei der ausgehend von der Fahrpedallstellung ein Wert für die Drehzahl und die Drosselklappenstellung vorgegeben wird. Eine optimierte Vorgabe der eingespritzten Kraftstoffmenge und der Getriebestellung abhängig von der Fahrpedalstellung ist mit dieser Einrichtung nicht möglich.

### Darstellung der Erfindung

Das erfindungsgemäße Verfahren zum Einstellen eines Verbrennungsmotors und eines feinstufigen Getriebes entsprechend den im Anspruch 1 aufgeführten Maßnahmen mit dem sich minimaler Kraftstoffverbrauch ergibt, zeichnet sich dadurch aus, daß durch die Fahrpedalstellung nicht mehr das Drehmoment und die Drehzahl, sondern die Motorleistung und die Drehzahl festgelegt werden. In allen Betriebszuständen wird der Kraftstofffluß, d. h. die Kraftstoffmenge pro Zeiteinheit auf einen durch die Fahrpedalstellung vorgegebenen Wert gesteuert. Gleichzeitig wird in allen Betriebszuständen das Übersetzungsverhältnis des Getriebes so geregelt, daß sich eine Motordrehzahl einstellt, die allein von der Fahrpedalstellung abhängt.

Dieses Verfahren sorgt für gutes Fahrverhalten sowohl bei stationären wie auch bei instationären Betriebszuständen und sorgt dafür, daß im Mittel mit sehr niedrigem Kraftstoffverbrauch gefahren wird.

Welcher Fahrpedalstellung welcher Leistungswunsch zugeordnet wird, ist frei wählbar. Der Zusammenhang wird in einem Kraftstofffluß-Fahrpedalstellungs-Kennlinienspeicher abgelegt. Liegt dieser Zusammenhang fest, ergibt sich der Zusammenhang zwischen Fahrpedalstellung und Drehzahl zwingend aus dem eingangs diskutierten Motorkennfeld unter Beachtung der Bedingung, daß jeweils minimaler Kraftstoffverbrauch erwünscht ist. Der sich ergebende Zusammenhang zwischen Fahrpedalstellung und Drehzahl wird ebenfalls in einem Kennlinienspeicher abgelegt.

Einspritzpumpen für Verbrennungsmotoren, sei es ein Dieselmotor oder ein Ottomotor, liefern bestimmte Kraftstoffmengen pro Einspritzung. Diese werden aus den jeweiligen Kraftstoffflußwerten durch Teilen durch den aktuellen Drehzahlwert erhalten. Vorteilhafterweise wird aber bei dieser Umrechnung von Kraftstoffflußmengen in Einspritzmengen ein Kennfeld verwendet, das neben der oben genannten Fahrpedalstellung-Kraftstoffflußmengen-Kennlinie noch weitere Möglichkeiten zum Einstellen der Fahrcharakteristik bietet.

Die Verfahren werden vorteilhafterweise von einem üblichen Kraftfahrzeug-Mikrorechner ausgeführt.

### Zeichnung

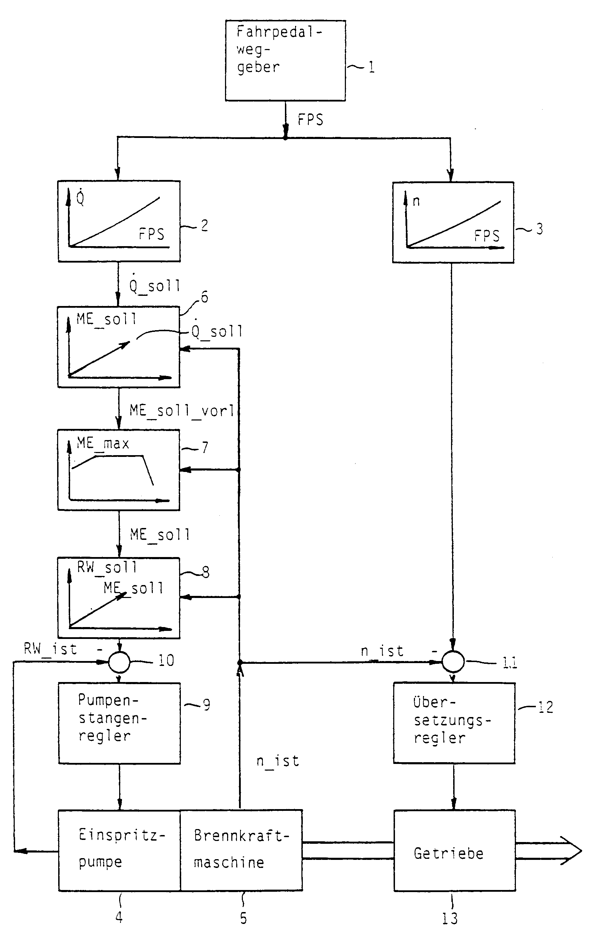

Die Zeichnung stellt in Blockdiagrammform einen Verfahrensablauf dar zum Steuern der einem Verbrennungsmotor zugeführten Kraftstoffmenge und zum Regeln der Drehzahl des Motors durch Regeln des Übersetzungsverhältnisses eines stufenlosen Getriebes.

### Beschreibung von Ausführungsbeispielen

Es werden zunächst Funktionseinheiten beschrieben, die zum Ausführen des mit Hilfe der Zeichnung veranschaulichten Verfahrens eingesetzt werden. Es ist ein Fahrpedal-Weggeber 1 vorhanden, der ein Fahrpedal-Stellungssignal FPS ausgibt, dessen jeweiliger Wert zum Adressieren von zwei Kennlinienspeichern dient. Diese Speicher sind ein Kraftstofffluß-Fahrpedalstellungs-Kennlinienspeicher 2, der einen Kraftstofffluß-Sollwert Q̇._soll ausgibt, und ein Drehzahl-Fahrpedalstellungs-Kennlinienspeicher 3, der einen Drehzahlsollwert n_soll liefert. Der Sollkraftstofffluß soll mit Hilfe einer Einspritzpumpe 4 einer Brennkraftmaschine 5 zugeführt werden. Hierzu muß jedoch der Sollkraftstofffluß, d. h. die Sollkraftstoffmenge pro Zeiteinheit in eine Kraftstoffmenge pro Einspritzung umgerechnet werden. Hierzu sind ein Einspritzmengenkraftstofffluß-Drehzahl-Kennfeldspeicher 6, ein Begrenzungskennlinienspeicher 7 und ein Pumpenkennfeldspeicher 8 vorhanden.

Es sei an dieser Stelle darauf hingewiesen, daß durch die Kraftstoffmenge pro Zeiteinheit die Leistung eines Verbrennungsmotors festgelegt ist. Mit zunehmender Drehzahl muß die Kraftstoffmenge pro Einspritzung geringer werden, wenn die Kraftstoffmenge pro Zeiteinheit konstant bleiben soll. Beim Verfahren gemäß dem Stand der Technik wurde dagegen die Kraftstoffmenge pro Einspritzung festgelegt, d. h. es wurde das Drehmoment statt der Leistung vorgegeben.

Mit Hilfe des Einspritzmengen-Kraftstofffluß-Drehzahl-Kennfeldes im zugeordneten Kennfeldspeicher 6 wird im wesentlichen eine Division des Kraftstofffluß-Sollwertes Q̇._soll durch die Istdrehzahl n_ist vorgenommen, wie sie vom Motor 5 ausgegeben wird. Mit Hilfe des Kennfeldes kann der reine Divisionswert jedoch noch etwas variiert werden, um die Fahrcharakteristik gezielt zu beeinflussen. Der vorläufige Mengensollwert ME_soll_vorl wird mit Hilfe einer Begrenzungskennlinie im zugehörigen Kennlinienspeicher 7 auf einen drehzahlabhängigen Maximalwert ME_max begrenzt. Es ergibt sich so der tatsächliche Kraftstoffmengensollwert ME_soll. Aus dem Pumpenkennfeld im zugehörigen Speicher 8 wird der Sollverstellweg RW_soll ausgelesen., auf den ein Pumpenstangenregler 9 die Pumpenstange in der Einspritzpumpe 4 einstellen soll. Ob der Sollwert tatsächlich erreicht worden ist, wird durch Vergleich mit einem Regelweg-Istwert RW_ist in einer Vergleichsstelle 10 überprüft. Der Ausgangswert aus der Vergleichsstelle 10 wird dem Pumpenstangenregler 9 zugeführt.

Ein Soll/Istwertvergleich findet auch für die Drehzahl statt, und zwar in einer Drehzahlvergleichsstel le 11. Der Ausgangswert von dieser Vergleichsstelle wird einem Übersetzungsregler 12 zugeführt, der entsprechend dem genannten Wert das Übersetzungsverhältnis eines stufenlosen Getriebes 13 einstellt.

Dadurch, daß abhängig vom Wert der Fahrpedalstellung FPS ein Steuern der Motorleistung parallel, also nicht in einer Folgeschaltung, ein Regeln der Motordrehzahl durch Regeln des Übersetzungsverhältnisses des stufenlosen Getriebes erfolgt, ergibt sich gutes Fahrverhalten, ohne zeitweilig zu hohe oder zu geringe Leistung bei im Mittel sehr geringem Kraftstoffverbrauch.

Beim Ausführungsbeispiel erfolgt das Umrechnen von Kraftstofffluß-Sollwerten in Mengen-Sollwerte mit Hilfe eines Kennfeldes, wie es im Speicher 6 abgelegt ist. Stattdessen könnte eine einfache Division durch die Istdrehzahl n_ist erfolgen.

Das Ausführungsbeispiel, in dem u. a. von einem Pumpenstangenregler 9 die Rede ist, setzt voraus, daß die Einspritzpumpe 4 eine solche für einen Dieselmotor ist. Das angegebene Verfahren kann jedoch entsprechend für einen Ottomotor eingesetzt werden. Dann kann die Mengenbegrenzung durch eine entsprechende Kennlinie, wie sie im zugehörigen Speicher 7 abgelegt ist, entfallen. Die Menge wird auch nicht durch Verstellen einer Pumpenstange festgelegt, sondern durch unterschiedlich lange Einspritzzeiten von Einspritzventilen. Bei einem Ottomotor muß allerdings darauf geachtet werden, daß für jede eingespritzte Kraftstoffmenge auch die zugehörige Luftmenge zur Verbrennung zur Verfügung steht.

Das geschilderte Verfahren klammert den Leerlaufbetrieb des Motors aus. Bei Leerlaufstellung des Fahrpedals sind besondere Maßnahmen vorzusehen, um unterhalb einer bestimmten Drehzahl das Getriebe abzukoppeln und den Motor auf konstante Drehzahl zu regeln. Dafür sind verschiedene Verfahren aus dem Stand der Technik bekannt.

Das Vorgeben der Motorleistung durch die Fahrpedalstellung statt des Drehmomentes, wie beim Stand der Technik, ist besonders bei niedrigen Geschwindigkeiten von Vorteil. Im unteren Geschwindigkeitsbereich ist nämlich der sich stark mit der Geschwindigkeit ändernde Luftwiderstand gegenüber anderen, im wesentlichen konstanten Widerständen vernachlässigbar. Da sich daher der Fahrwiderstand mit ändernder Geschwindigkeit kaum ändert, führen geringe Änderungen im Drehmoment zu relativ großen Geschwindigkeitsänderungen. Jedes kleine Verstellen des Fahrpedals hat demgemäß eine relativ hohe Geschwindigkeitsänderung zur Folge. Die Leistung steigt jedoch im unteren Geschwindigkeitsbereich im wesentlichen proportional mit der Geschwindigkeit an, so daß größere Geschwindigkeitsänderungen auch mit größeren Leistungsänderungen verbunden sind. Wird nun durch die Fahrpedalstellung die Motorleistung vorgegeben, führen kleine Fahrpedaländerungen nur zu kleinen Geschwindigkeitsänderungen. Das Fahrverhalten wird also durch das Vorgeben der Motorleistung statt des Drehmoments durch die Fahrpedalstellung erheblich verbessert.

Das Vorgeben der Motorleistung statt des Drehmomentes durch die Fahrpedalstellung ist daneben bei solchen Motoren von Vorteil, bei denen sich in einem oberen Drehmomentenberelch, abhängig von der Drehzahl, kaum mehr ändert. Zu einem einzigen Drehmoment können dann mehrere Drehzahlen optimalen Verbrauchs gehören. Bei Drehmomentvorgabe muß in diesem Fall entschieden werden, auf welche der mehreren möglichen Drehzahlen der Motor mit Hilfe der Getriebeübersetzung eingestellt werden soll. Beim Vorgeben von Leistung entfällt das Erfordernis für eine solche Entscheidung, da sich auch bei derartigen Motoren die Leistung bei im wesentlichen konstantem Drehmoment stark mit der Drehzahl ändert.

## Patentansprüche

1. Verfahren zum Einstellen der Kraftstoffmenge, die einem Verbrennungsmotor (5) abhängig von der Stellung eines Fahrpedals (1) zugeführt wird, und zum gleichzeitigen Regeln des Übersetzungsverhältnisses eines feinstufigen Getriebes (13) und damit der Drehzahl des Motors so, daß sich ein minimaler Kraftstoffverbrauch ergibt, dadurch gekennzeichnet, daß ein Wert für den Kraftstofffluß, d.h. die Kraftstoffmenge pro Zeiteinheit, und damit die Motorleistung festgelegt wird, abhängig von der Fahrpedalstellung aus einem Kraftstofffluß-Fahrpedalstellungs-Kennlinienspeicher (2) ausgelesen wird, daß ein Wert für die Motor-Solldrehzahl abhängig von der Fahrpedalstellung aus einem Solldrehzahl-Fahrpedal-Kennlinienspeicher (3) ausgelesen wird, und daß das Übersetzungsverhältnis des Getriebes in allen Betriebszuständen unabhängig von der Steuerung des Kraftstoffflusses so geregelt wird, daß sich der Wert der Motor-Solldrehzahl einstellt.

2. Verfahren nach Anspruch 1, **dadurch gekennzeichnet,** daß Einspritzmengenwerte aus einem Einspritzmengen-Kraftstofffluß-Drehzahl-Kennlinienspeicher ausgelesen werden, der über Werte von Kraftstofffluß und Motordrehzahl adressierbar ist.

## Claims

1. Method for setting the quantity of fuel which is fed to an internal combustion engine (5) as a function of the position of an accelerator pedal (1), and for simultaneously controlling the transmission ratio of a fine-increment transmission (13) and thus the speed of revolution of the engine in such a way that a minimum fuel consumption results, characterized in that a value for the fuel flow is read out from a fuel-flow accelerator pedal position characteristic-curve memory (2) as a function of the position of the accelerator pedal, i.e. the quantity of fuel per time unit, and thus the performance of the engine are determined, in that a value for the desired speed of revolution of the engine is read out from a desired speed of revolution accelerator pedal characteristic-curve memory (3) as a function of the accelerator pedal position, and in that the transmission ratio of the transmission is controlled in all operating states independently of the control of the fuel flow in such a way that the value of the desired speed of revolution of the engine is set.

2. Method according to Claim 1, characterized in that injection quantity values are read out from a characteristic-curve memory for injection quantity, fuel flow and speed of revolution, which characteristic-curve memory can be addressed via values of fuel flow and speed of revolution of the engine.

## Revendications

1. Procédé pour la commande de la quantité de carburant alimentant un moteur à combustion interne (5) en fonction de la position d'une pédale d'accélérateur (1), et pour le réglage simultané du rapport de transmission d'une transmission à petits échelons (13) et ainsi de la vitesse de rotation du moteur de manière à obtenir une consommation minimale en carburant, caractérisé en ce qu'une valeur pour le débit de carburant, c'est-à-dire pour la quantité de carburant par unité de temps et ainsi la puissance du moteur est lue en fonction de la position de la pédale, dans une mémoire de caractéristiques (débit de carburant-position de la pédale d'accélérateur) (2) et en ce qu'une valeur pour la valeur de consigne de la vitesse de rotation du moteur est lue en fonction de la position de la pédale d'accélérateur dans une mémoire de caractéristiques (vitesse de rotation de consigne-position de la pédale) (3) et en ce que le rapport de transmission de la transmission dans tous les états de fonctionnement est réglé indépendamment de la commande du débit de carburant de telle sorte que s'instaure la valeur de consigne de la vitesse de rotation.

2. Procédé selon la revendication 1, caractérisé en ce que des valeurs de quantités de carburant injectées sont lues dans une mémoire de caractéristiques (quantité de carburant injectée-débit de carburant-vitesse de rotation) qui peut être adressée par des valeurs du débit de carburant et de la vitesse de rotation du moteur.
